# EUROPEAN PATENT APPLICATION

(11) **EP 4 637 117 A1**
(43) Date of publication of application: **22.10.2025**
(21) Application number: 23902254.4
(22) Date of filing: 09.10.2023
(51) Int. Cl.: H04L 67/125

(54) **DEVICE CONTROL METHOD AND APPARATUS, AND ELECTRONIC DEVICE AND COMPUTER STORAGE MEDIUM**

(30) Priority: 13.12.2022 CN 202211603348
(71) Applicant: Shenzhen TCL New Technology Co., Ltd., Shenzhen, Guangdong 518052 (CN)
(72) Inventor: WANG, Yinhua, Shenzhen, Guangdong 518052 (CN)
(74) Representative: Herrero & Asociados, S.L.
(86) International application number: PCT/CN2023/123635
(87) International publication number: WO 2024/125052

(57) **Abstract**

Disclosed in the present application are a device control method and apparatus, and an electronic device and a computer storage medium. **In** the present application, attribute state data is first stored in a preset message queue, and the attribute state data is then consumed from the preset message queue by means of a plurality of consumer threads, such that when the amount of attribute state data is relatively large, consumer threads cannot be created without limit so as to avoid server crashes, and peak shaving and valley filling are performed on state attribute data by means of the preset message queue, thereby improving the concurrency performance of a server.

## Description

This application claims the priority of Chinese Patent Application No. 202211603348.0, entitled "DEVICE CONTROL METHOD AND APPARATUS, AND ELECTRONIC DEVICE AND COMPUTER STORAGE MEDIUM", filed on December 13, 2022, the disclosure of which is incorporated herein by reference in its entirety.

### FIELD OF THE DISCLOSURE

The present disclosure relates to the field of data processing technology, and in particular to a method of controlling devices, apparatus, electronic device and computer storage medium.

### BACKGROUND

With the development of science and technology, Internet of Things (IoT) devices are becoming more and more popular among users, and more and more IoT devices are controlled by the same user.

In order to facilitate users to control IoT devices, each IoT device will be associated with a scene, and then the server will determine whether to trigger the scene based on the status data of the IoT device, thereby determining whether to trigger the IoT device associated with the scene. However, due to the large amount of status data obtained, it takes a long time to determine whether a scene is triggered, and the server's concurrency performance is low.

### Technical problem

A large amount of status data is obtained, which results in a longer time to determine whether a scene is triggered and lower concurrent performance of the server.

### Technical Solution

An embodiment of the present disclosure provides a method of controlling devices. The method includes:
acquiring attribute state data reported by a plurality of first IoT devices;
sending the attribute state data to a predetermined message queue in response to determining that the attribute state data meets a predetermined trigger condition;
obtaining a plurality of consumer threads of the predetermined message queue, and acquiring, by the consumer threads, a target predetermined scene associated with the first IoT devices and a current device shadow of a second IoT device corresponding to the target predetermined scene based on the attribute state data;
generating an action execution instruction for the second IoT device by the consumer threads based on the target predetermined scene in response to determining that the current device shadow matches a predetermined device shadow of the second IoT device in the target predetermined scene; and
transmitting, by the consumer threads, the action execution instruction to the second IoT device to control the second IoT device to perform an operation corresponding to the action execution instruction.

Accordingly, another embodiment of the present disclosure provides an apparatus for controlling devices. The apparatus includes:
a data acquisition module configured to acquire attribute state data reported by a plurality of first IoT devices;
a data transmission module configured to, in response to determining that the attribute state data meets a predetermined trigger condition, transmit the attribute state data to a predetermined message queue;
a thread acquisition module configured to obtain a plurality of consumer threads of the predetermined message queue, and, by the consumer threads, acquire a target predetermined scene associated with the first IoT devices and a current device shadow of a second IoT device corresponding to the target predetermined scene based on the attribute state data;
an instruction generation module configured to, in response to determining that the current device shadow matches a predetermined device shadow of the second IoT device in the target predetermined scene, generate, by the consumer threads, an action execution instruction for the second IoT device based on the target predetermined scene; and
an instruction transmission module configured to, by the consumer threads, transmit the action execution instruction to the second IoT device to control the second IoT device to perform an operation corresponding to the action execution instruction.

In addition, another embodiment of the present disclosure provides an electronic device. The electronic device includes a processor and a memory. The memory stores computer program executable by the processor to perform the method of controlling devices provided in the embodiment of the present disclosure.

In addition, an embodiment of the present disclosure further provides a computer-readable storage medium, which stores computer program executable by a processor to perform the method of controlling devices provided in the embodiment of the present disclosure.

In addition, an embodiment of the present disclosure also provides a computer program product that includes computer program. When the computer program is executed by a processor, any method of controlling devices provided in the embodiment of the present disclosure is implemented.

### Advantageous effects

In an embodiment of the present disclosure, attribute status data reported by multiple first IoT devices are obtained; if the attribute status data meets the preset trigger condition, the attribute status data is sent to a preset message queue; multiple consumer threads of the preset message queue are obtained, and the target preset scene associated with the first IoT device and the current device shadow of the second IoT device corresponding to the target preset scene are obtained through the consumer thread according to the attribute status data; if the current device shadow matches the preset device shadow corresponding to the second IoT device in the target preset scene, an action execution instruction for the second IoT device is generated according to the target preset scene through the consumer thread; the action execution instruction is sent to the second IoT device through the consumer thread to control the second IoT device to execute the operation corresponding to the action execution instruction, so as to realize the judgment of whether to trigger the target preset scene through multiple consumer threads of the preset message queue, speed up the triggering of the target preset scene, and improve the concurrency performance of the server.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those skilled in the art, other drawings can be obtained based on these drawings without creative work.
FIG. 1 illustrates a flow chart of a method of controlling devices according to an embodiment of the present disclosure.
FIG. 2 illustrates a shadow set provided in an embodiment of the present disclosure.
FIG. 3 illustrates a method of controlling devices according to another embodiment of the present disclosure.
FIG. 4 illustrates another method of controlling devices according to another embodiment of the present disclosure.
FIG. 5 illustrates another method of controlling devices according to still another embodiment of the present disclosure.
FIG. 6 illustrates a block diagram of a device control device an to another embodiment of the present disclosure.
FIG. 7 illustrates a block diagram of a device control device according to another embodiment of the present disclosure

### DETAILED DESCRIPTION OF THE PRESENT DISCLOSURE

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by those skilled in the art without creative work are within the scope of protection of the present disclosure.

The embodiments of the present disclosure provide a method of controlling devices, device, electronic device and computer storage medium. The device control device can be integrated in an electronic device, and the electronic device can be a server or a gateway.

Among them, the server can be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, network acceleration services (Content Delivery Network, CDN), as well as big data and artificial intelligence platforms.

The gateway and the server may be connected directly or indirectly via wired or wireless communication, which is not limited in the present disclosure.

In addition, the term "plurality" in the embodiments of the present disclosure refers to two or more than two. The terms "first" and "second" in the embodiments of the present disclosure are used to distinguish descriptions and should not be understood as implying relative importance.

It should be noted that the description order of the following embodiments is not intended to limit the preferred order of the embodiments.

In this embodiment, the description will be made from the perspective of the device control apparatus. To facilitate the description of the method of controlling devices of the present disclosure, the device control apparatus will be integrated in a server for detailed description, that is, the server will be used as the execution subject for detailed description.

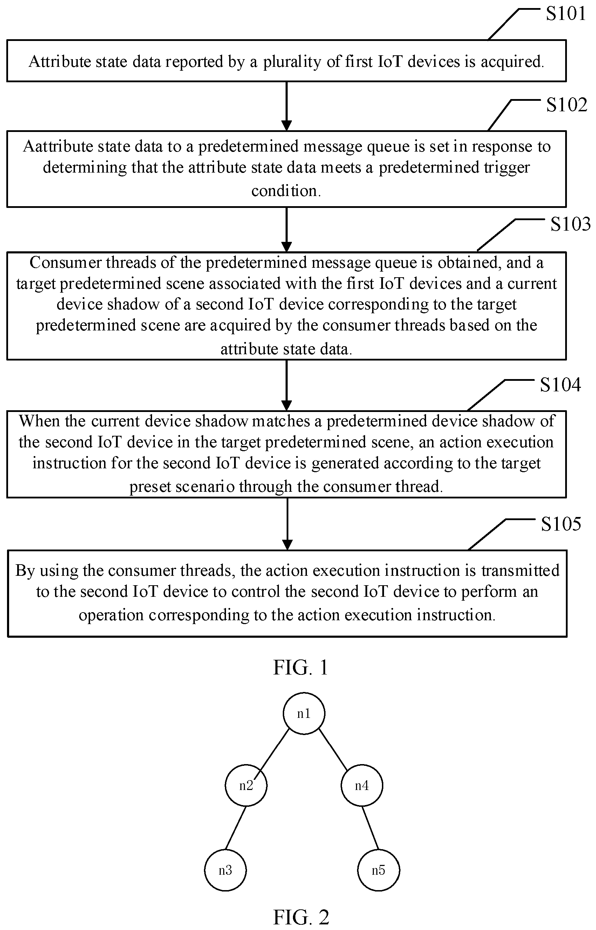

Please refer to FIG. 1 illustrating a flow chart of a method for controlling devices in an Internet of Things (IoT) system according to an embodiment of the present disclosure. The method may include blocks S101-S105.

At block S101, attribute state data reported by a plurality of first IoT devices is acquired.

In the present disclosure, a first IoT device may serve as a trigger device for various predetermined scenes, that is, the first IoT device may function as a trigger to determine whether to activate a predetermined scene. For example, the first IoT device may be various types of sensors, or a terminal device that includes a sensor.

It should be understood that the first IoT devices for different predetermined scenes may be the same or different. When the first IoT devices for different predetermined scenes are the same and the predetermined trigger conditions satisfied by the first IoT devices for different predetermined scenes are also the same, it may be understood that when the attribute state data of the first IoT device meets the predetermined trigger condition, multiple predetermined scenes may be triggered simultaneously.

The attribute state data refers to data that indicates the properties of the first IoT device. The properties of the first IoT device may include static properties or dynamic properties. For example, the attribute state data may include a device identifier of the first IoT device, which represents a static property of the first IoT device. Alternatively, the attribute state data may include state data of the first IoT device, which represents a dynamic property of the first IoT device.

The state data may refer to real-time data collected by the first IoT device. For example, when the first IoT device is an infrared sensor, the state data may be data collected by the infrared sensor. The data collected by the infrared sensor may indicate two states: one state indicating presence of a person and another state indicating absence of a person.

The first IoT device may periodically collect the attribute state data and periodically transmit the attribute state data to a server, so that the server acquires the attribute state data reported by a plurality of first IoT devices. Alternatively, the first IoT device may collect the attribute state data in response to receiving a collection instruction, and transmit the attribute state data to the server, so that the server acquires the attribute state data reported by the first IoT device.

The method by which the server acquires the attribute state data reported by the first IoT device may be selected based on actual requirements. This embodiment does not impose any particular limitation in this regard.

At block S102, the attribute state data to a predetermined message queue is set in response to determining that the attribute state data meets a predetermined trigger condition.

It should be understood that the determination of whether the attribute state data meets the predetermined trigger condition may be performed by the server, or alternatively, by the first IoT device. If the predetermined trigger condition is satisfied, the first IoT device may transmit, to the server, an indication that the attribute state data satisfies the predetermined trigger condition along with the attribute state data itself. The server may then transmit the attribute state data to the predetermined message queue.

The predetermined message queue refers to a container for storing messages. The type of the predetermined message queue may be selected based on actual requirements. For example, the predetermined message queue may be an MQ message queue, an ActiveMQ message queue, a RabbitMQ message queue, a ZeroMQ message queue, or any other suitable type of message queue. This embodiment does not impose any particular limitation in this regard.

Optionally, the server may input an attribute identifier and state data included in the attribute state data into a trigger tree, so as to determine, via the trigger tree, whether the attribute identifier and state data satisfy the predetermined trigger condition.

The trigger tree refers to a tree structure capable of matching strings. Specifically, strings corresponding to predetermined trigger conditions may be stored in the trigger tree in advance. The attribute identifier and state data included in the attribute state data may then be input into the trigger tree for matching. If a string matching the attribute identifier and state data exists in the trigger tree, it is determined that the attribute identifier and state data satisfy the predetermined trigger condition.

For example, a string of the form (P1:V1) may be input into the trigger tree, resulting in an output of either true or false, where P1 represents the attribute identifier, V1 represents the state data, true indicates that the predetermined trigger condition is satisfied, and false indicates that the predetermined trigger condition is not satisfied.

At block S103, a plurality of consumer threads of the predetermined message queue is obtained, and a target predetermined scene associated with the first IoT devices and a current device shadow of a second IoT device corresponding to the target predetermined scene are acquired by the consumer threads based on the attribute state data.

A consumer thread refers to a collection of processes or programs configured to process attribute state data. A device shadow may refer to a document used to store the state of a device, allowing the state of the device to be known from the device shadow regardless of whether the device is currently online, thereby decoupling the device state from the physical device.

A current device shadow may refer to a document that includes the current state of a second IoT device. The second IoT device may refer to an IoT device controlled within a target predetermined scene. For example, in a target predetermined scene corresponding to a "return home" scenario, the first IoT device may be a time sensor, and the second IoT devices may include an air conditioner, a light, and a water heater.

The target predetermined scene associated with the first IoT device may include a plurality of target predetermined scenes, and each target predetermined scene may be associated with a plurality of second IoT devices.

The server may determine, via the consumer threads, the first IoT device corresponding to the device identifier included in the attribute state data, and then acquire the target predetermined scene associated with the first IoT device as well as the current device shadow of each second IoT device corresponding to the target predetermined scene.

For example, if the first IoT device is an infrared sensor and its device identifier is d1, and the device identifier included in the attribute state data is also d1, the target predetermined scene associated with the first IoT device is s1, and the second IoT device corresponding to the target predetermined scene is an air conditioner with a device identifier of d2, then the server may first determine that d1 corresponds to the infrared sensor, then determine that d1 corresponds to s1, subsequently determine that s1 corresponds to d2, and finally acquire the current device shadow of d2.

At block S104, when the current device shadow matches a predetermined device shadow of the second IoT device in the target predetermined scene, an action execution instruction for the second IoT device is generated according to the target preset scenario through the consumer thread.

A predetermined device shadow refers to a document that includes the target state of a second IoT device. A match between the current device shadow and the predetermined device shadow of the second IoT device in the target predetermined scene may be understood as a match between the state in the current device shadow and the state in the predetermined device shadow.

For example, in a target predetermined scene corresponding to a "return home" scenario, the second IoT devices may include a light, a water heater, and an air conditioner. In the predetermined device shadow corresponding to the target predetermined scene, the states of the light, water heater, and air conditioner are all set to an "off" state. The action execution instruction for the light is to "turn on," the action execution instruction for the water heater is to "turn on and adjust the temperature to 42°C," and the action execution instruction for the air conditioner is to "turn on and adjust the temperature to 23°C." If the states of the light, water heater, and air conditioner in the current device shadow are also all in the "off" state, then the consumer threads may generate, based on the target predetermined scene, an action execution instruction to "turn on" the light, an action execution instruction to "turn on and adjust the temperature to 42°C" for the water heater, and an action execution instruction to "turn on and adjust the temperature to 23°C" for the air conditioner.

In this embodiment, a plurality of consumer threads are used to determine whether to trigger the target predetermined scene, thereby improving the concurrency performance of the server. Additionally, the attribute state data is first stored in the predetermined message queue and then consumed by the plurality of consumer threads from the predetermined message queue. This approach ensures that when the volume of attribute state data is large, consumer threads are not created without limitation, thereby preventing server crashes. By using the predetermined message queue to buffer the attribute state data, the peak load on the server is mitigated, thereby improving the server's concurrency performance.

At block S105, by using the consumer threads, the action execution instruction is transmitted to the second IoT device to control the second IoT device to perform an operation corresponding to the action execution instruction.

After receiving the action execution instruction, the server transmits the action execution instruction to the second IoT device via the consumer threads, and the second IoT device performs an operation corresponding to the action execution instruction.

As described above, in the embodiments of the present disclosure, attribute state data reported by a plurality of first IoT devices is acquired. If the attribute state data meets a predetermined trigger condition, the attribute state data is transmitted to a predetermined message queue. A plurality of consumer threads of the predetermined message queue are obtained, and the consumer threads are used to acquire, based on the attribute state data, a target predetermined scene associated with the first IoT device and a current device shadow of a second IoT device corresponding to the target predetermined scene. If the current device shadow matches a predetermined device shadow of the second IoT device in the target predetermined scene, the consumer threads generate, based on the target predetermined scene, an action execution instruction for the second IoT device. The consumer threads then transmit the action execution instruction to the second IoT device to control the second IoT device to perform an operation corresponding to the action execution instruction.

Through this approach, whether to trigger the target predetermined scene is determined by the plurality of consumer threads consuming from the predetermined message queue, thereby accelerating the triggering of the target predetermined scene and improving the concurrency performance of the server.

In some embodiments, the attribute state data comprises a device identifier and an attribute identifier of the first IoT device. Acquiring attribute state data reported by a plurality of first IoT devices comprises:
acquiring initial attribute state data reported by the plurality of first IoT devices;
determining a scene state corresponding to the first IoT device based on the device identifier and the attribute identifier included in the initial attribute state data; and
in response to determining that the scene state corresponding to the first IoT device is a target scene state, using the initial attribute state data of the first IoT device as the attribute state data reported by the first IoT device.

The attribute identifier refers to a field corresponding to the state data included in the attribute state data. For example, when the first IoT device is an infrared sensor, the state data may be a value, and the attribute identifier may be a radiation level.

When the scene state is the target scene state, it indicates that the first IoT device is associated with a corresponding target predetermined scene, that is, the first IoT device serves as a trigger for a predetermined scene. In this embodiment, prior to determining whether the attribute state data meets the predetermined trigger condition, the first IoT devices that do not have a corresponding target predetermined scene are filtered out. This reduces the computational load involved in determining whether the attribute state data meets the predetermined trigger condition, thereby further accelerating the triggering of the target predetermined scene and further improving the concurrency performance of the server.

In another embodiments, using the initial attribute state data of the first IoT device as the attribute state data reported by the first IoT device in response to determining that the scene state corresponding to the first IoT device is a target scene state comprises:
in response to determining that the scene state corresponding to the first IoT device is a target scene state, selecting a target predetermined scene corresponding to the first IoT device from a plurality of predetermined scenes;
acquiring an acquisition time of the initial attribute state data; and
in response to determining that an effective time of the target predetermined scene matches the acquisition time, using the initial attribute state data of the first IoT device as the attribute state data reported by the first IoT device.

When the first IoT device has a corresponding target predetermined scene, if the acquisition time of the initial attribute state data does not fall within the effective time of the target predetermined scene, even if the attribute state data meets the predetermined trigger condition, it is unnecessary to execute the target predetermined scene. Therefore, in this embodiment, when it is determined that the first IoT device has a corresponding target predetermined scene, it is further determined whether the acquisition time of the initial attribute state data falls within the effective time of the target predetermined scene. If the acquisition time falls within the effective time of the target predetermined scene, the initial attribute state data of the first IoT device is then used as the attribute state data reported by the first IoT device. This reduces the computational load involved in determining whether the attribute state data meets the predetermined trigger condition, thereby further accelerating the triggering of the target predetermined scene and further improving the concurrency performance of the server.

In other embodiments, determining a scene state corresponding to the first IoT device based on the device identifier and the attribute identifier in the initial attribute state data comprises:
acquiring an array corresponding to a predetermined scene, the array comprising mapping values of device identifiers and attribute identifiers corresponding to the predetermined scene;
performing a mapping process on the device identifier and the attribute identifier in the initial attribute state data to obtain a current mapping value; and
in response to determining that the array comprises a mapping value matching the current mapping value, determining the scene state of the first IoT device as the target scene state.

The server may concatenate the device identifier and the attribute identifier to obtain a concatenated identifier, and then perform a hash mapping on the concatenated identifier to obtain the current mapping value. Alternatively, the server may perform a mapping process separately on the device identifier and the attribute identifier in the initial attribute state data to obtain a first current mapping value corresponding to the device identifier and a second current mapping value corresponding to the attribute identifier. The current mapping value is then determined based on the first current mapping value and the second current mapping value.

After obtaining the current mapping value, the server matches the current mapping value against the mapping values included in the array. If the array comprises a mapping value matching the current mapping value, the scene state of the first IoT device is determined as the target scene state.

When the current mapping value is obtained via the concatenated identifier, the current mapping value may be directly matched against the mapping values in the array. When the device identifier and the attribute identifier are mapped separately, the first current mapping value may be matched against the mapping values in the array and the second current mapping value may also be matched against the mapping values in the array. In this case, if the array comprises a mapping value matching the first current mapping value and also comprises a mapping value matching the second current mapping value, the scene state of the first IoT device is determined as the target scene state.

In some embodiments, the process of determining the scene state of the first IoT device as the target scene state in response to determining that the array comprises a mapping value matching the current mapping value may comprise:
determining a difference between the current mapping value and each mapping value in the array; and
in response to determining that a difference satisfies a predetermined difference condition, using the mapping value corresponding to the difference that satisfies the predetermined difference condition as the mapping value matching the current mapping value.

To further accelerate the determination of whether a mapping value matching the current mapping value exists, in other embodiments, each mapping value in the array may correspond to a target value, and the process of determining the scene state of the first IoT device as the target scene state in response to determining that the array comprises a mapping value matching the current mapping value may further comprise:
determining a current position in the array corresponding to the matching current mapping value; and
in response to determining that a value at the current position is the target value, determining the scene state of the first IoT device as the target scene state.

In this embodiment, the mapping value represents a position in the array. For example, after performing a mapping process on the device identifier and the attribute identifier, a mapping value of 13 may be obtained, indicating that the target value is stored at the 13th position in the array. After obtaining the current mapping value, if the value at the current position in the array corresponding to the current mapping value is the target value, it is determined that the first IoT device has a corresponding target predetermined scene.

The target value may be set based on actual requirements. For example, the target value may be set to 1 or 2. This embodiment does not impose any particular limitation in this regard.

It should be understood that the server may also perform mapping on the device identifier and the attribute identifier using multiple different hash functions in parallel to obtain multiple current mapping values corresponding to the device identifier and the attribute identifier. In such cases, when the values at the current positions in the array corresponding to each of the current mapping values are all determined to be the target value, the scene state of the first IoT device is determined as the target scene state. In this case, a Bloom filter may be used to determine the scene state corresponding to the first IoT device.

In this embodiment, the current mapping value and the mapping values represent positions in the array. The value at the corresponding position is checked to determine whether it is the target value, thereby determining whether the first IoT device has a corresponding target predetermined scene. This allows the scene state of the first IoT device to be determined more quickly.

Since the server may acquire attribute state data from many first IoT devices at the same time, if the server were to individually determine whether each piece of attribute state data meets the predetermined trigger condition, the process would be relatively slow. Therefore, to accelerate the determination of whether the attribute state data meets the predetermined trigger condition, in other embodiments, the transmitting the attribute state data to the predetermined message queue in response to determining that the attribute state data meets the predetermined trigger condition may comprise:
creating a thread pool based on the attribute state data, wherein the thread pool comprises a plurality of determination threads; and
determining, by the determination threads, whether the attribute state data meets the predetermined trigger condition.

In this embodiment, a plurality of determination threads are used to determine whether the attribute state data meets the predetermined trigger condition, thereby accelerating the process of transmitting the attribute state data to the predetermined message queue. This enables faster triggering of the target predetermined scene in subsequent steps, thereby further improving the concurrency performance of the server.

In other embodiments, the attribute state data further comprises a user identifier that triggered the first IoT device. The process of determining, by the determination threads, whether the attribute state data meets the predetermined trigger condition may comprise:
verifying, by the determination threads, a trigger permission of the user identifier; and
in response to the trigger permission verification being successful, determining, by the determination threads, whether the attribute state data meets the predetermined trigger condition.

In this embodiment, the trigger permission of the user that triggered the first IoT device is verified. Only when a user having trigger permission for the first IoT device triggers the first IoT device will the determination threads proceed to determine whether the attribute state data meets the predetermined trigger condition, thereby ensuring system security.

In other embodiments, generating, by the consumer threads, an action execution instruction for the second IoT device based on the target predetermined scene in response to determining that the current device shadow matches a predetermined device shadow of the second IoT device in the target predetermined scene comprises:
performing an action permission verification on the second IoT device in response to determining that the current device shadow matches the predetermined device shadow of the second IoT device in the target predetermined scene; and
in response to the action permission verification being successful, generating the action execution instruction for the second IoT device based on the target predetermined scene.

Performing an action permission verification on the second IoT device may refer to verifying a home identifier corresponding to the second IoT device against a home identifier corresponding to the target predetermined scene. For example, when the home identifier corresponding to the second IoT device matches the home identifier corresponding to the target predetermined scene, it indicates that the home to which the second IoT device belongs is the same as the home to which the target predetermined scene belongs, and the action permission verification on the second IoT device is successful.

It should be understood that the action permission verification may vary depending on the type of second IoT device. For example, when the second IoT device is a Wi-Fi device, it may be verified whether the home to which the second IoT device belongs is the same as the home to which the target predetermined scene belongs. If they match, the action permission verification on the second IoT device is successful. As another example, when the second IoT device is a lighting group, it may be verified whether the home identifier corresponding to the user to whom the lighting group belongs matches the home identifier corresponding to the target predetermined scene. If they match, the action permission verification on the second IoT device is successful.

In this embodiment, when the current device shadow matches the predetermined device shadow of the second IoT device in the target predetermined scene, an action permission verification is performed on the second IoT device. Only when the action permission verification on the second IoT device is successful is the action execution instruction for the second IoT device generated based on the target predetermined scene, thereby improving the accuracy of the action execution instruction.

In other embodiments, prior to determining that the current device shadow matches a predetermined device shadow of the second IoT device in the target predetermined scene, the method further comprises:
acquiring a shadow set generated based on the predetermined device shadow corresponding to the second IoT device in the target predetermined scene;
selecting a target second IoT device from among the second IoT devices, and selecting a target shadow set from the shadow set, wherein the target shadow set comprises a target predetermined device shadow that matches the current device shadow of the target second IoT device;
determining a matching result of the second IoT device based on the target shadow set; and
in response to the matching result being a first result, determining that the current device shadow matches the predetermined device shadow of the second IoT device in the target predetermined scene.

Since a single second IoT device may correspond to multiple target predetermined scenes, and the predetermined device shadow corresponding to each target predetermined scene may be the same or different, all predetermined device shadows corresponding to target predetermined scenes that contain the same predetermined device shadow may be grouped into a single shadow set. The target shadow set may then be selected from the shadow set to include a target predetermined device shadow that matches the current device shadow of the target second IoT device, thereby enabling a faster determination of the matching result of the second IoT device based on the target shadow set.

For example, the target second IoT device is IoT device A. In target predetermined scene *c1,* the predetermined device shadow corresponding to IoT device A is *1*; in target predetermined scene *c2,* the predetermined device shadow corresponding to IoT device A is also *1*; and in target predetermined scene *c3,* the predetermined device shadow corresponding to IoT device A is *2.* In this case, the predetermined device shadows corresponding to target predetermined scenes *c1* and *c2* may be grouped into shadow set *g1,* and the predetermined device shadow corresponding to target predetermined scene *c3* may be grouped into shadow set *g2.* If the current device shadow of IoT device A is *1,* then shadow set *g1* is selected as the target shadow set.

It should be noted that the shadow set may include predetermined device shadows of multiple second IoT devices. For example, the target shadow set may include not only the predetermined device shadow of the target second IoT device, but also predetermined device shadows of initial second IoT devices other than the target second IoT device.

Alternatively, the shadow set may include only the predetermined device shadow of a single second IoT device. In this case, the shadow set may be understood as a node in a matching tree. Specifically, shadow sets may first be used as nodes to construct a matching tree. In this case, determining the matching result of the second IoT device based on the target shadow set comprises:
searching a lower-level shadow set corresponding to the target shadow set from the shadow set; and
matching a current device shadow of an initial second IoT device among the second IoT devices with a predetermined device shadow in the lower-level shadow set to obtain the matching result of the second IoT device.

If there are multiple initial second IoT devices, the current device shadow of each initial second IoT device is matched with the lower-level shadow set corresponding to the initial second IoT device, until the current device shadow of each initial second IoT device is successfully matched.

The lower-level shadow set may be understood as a child node of the target shadow set. For example, as illustrated in FIG. 2, the second IoT devices include IoT device A, IoT device B, and IoT device C. IoT device A is the target second IoT device, and IoT devices B and C are initial second IoT devices. The current device shadow of IoT device A is *1,* the current device shadow of IoT device B is *1,* and the current device shadow of IoT device C is *0.*

The target shadow set corresponds to node *n1,* where node *n1* indicates that the predetermined device shadow is *1*. The lower-level shadow set corresponding to the target shadow set may include node *n2* or node *n4.* Node *n2* indicates that the predetermined device shadow is *1,* node *n3* indicates that the predetermined device shadow is *0,* node *n4* indicates that the predetermined device shadow is *0,* and node *n5* indicates that the predetermined device shadow is *1.*

Since the current device shadow of IoT device B is *1,* the current device shadow of IoT device B matches the shadow set corresponding to node *n2.* As IoT device C is still present, the current device shadow of IoT device C is then matched with the lower-level shadow set corresponding to node *n2,* that is, node *n3.* If node *n3* is an end node, the matching result of the second IoT device is determined as the first result.

In this embodiment, a matching tree is constructed using predetermined device shadows as nodes. The same predetermined device shadow corresponding to different target predetermined scenes for the same second IoT device is represented as the same node in the matching tree. The current device shadow is then input into the matching tree for traversal, thereby reducing the number of nodes traversed and improving the matching speed.

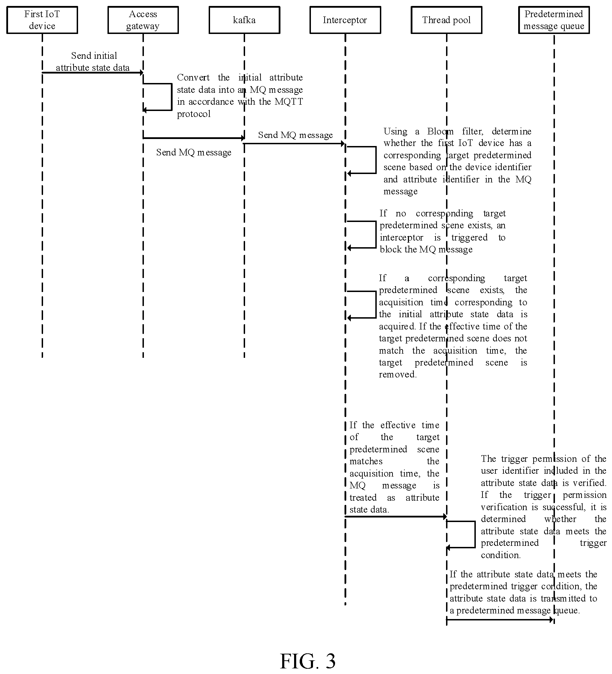

The method of controlling devices according to this embodiment is described with reference to FIG. 3, FIG. 4, and FIG. 5.

As illustrated in FIG. 3, the first IoT device transmits initial attribute state data to an access gateway of the server. The access gateway converts the initial attribute state data into an MQ message in accordance with the MQTT protocol and transmits the MQ message to a Kafka message queue.

The server acquires the MQ message from the Kafka message queue and uses a Bloom filter to determine, based on the device identifier and the attribute identifier in the MQ message, whether the first IoT device has a corresponding target predetermined scene. If no corresponding target predetermined scene exists, an interceptor is triggered to block the MQ message. If a corresponding target predetermined scene exists, the server acquires an acquisition time corresponding to the initial attribute state data. If the effective time of the target predetermined scene does not match the acquisition time, the target predetermined scene is removed. If the effective time of the target predetermined scene matches the acquisition time, the MQ message is used as the attribute state data.

The server creates a thread pool based on the attribute state data, where the thread pool comprises a plurality of determination threads. The determination threads perform verification of the trigger permission of a user identifier included in the attribute state data. If the trigger permission verification is successful, the determination threads proceed to determine whether the attribute state data meets the predetermined trigger condition. If the attribute state data meets the predetermined trigger condition, it is transmitted to the predetermined message queue.

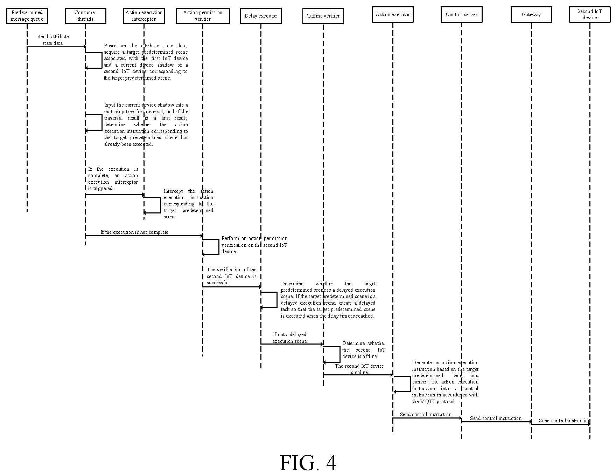

The server uses a plurality of consumer threads to consume the attribute state data from the predetermined message queue. As illustrated in FIG. 4, the server acquires, via the consumer threads and based on the attribute state data, the target predetermined scene associated with the first IoT device and the current device shadow of the second IoT device corresponding to the target predetermined scene. The current device shadow is input into the matching tree for traversal. If the traversal result is the first result, the consumer threads determine whether the action execution instruction corresponding to the target predetermined scene has already been executed. If the action execution instruction has already been executed, an action execution interceptor is triggered by the consumer threads to intercept the action execution instruction corresponding to the target predetermined scene.

If the action execution instruction corresponding to the target predetermined scene has not yet been executed, an action permission verifier is triggered by the consumer threads to perform an action permission verification on the second IoT device. If the action permission verification on the second IoT device is successful, a delay executor is triggered by the consumer threads to determine whether the target predetermined scene is a delayed execution scene. If it is a delayed execution scene, a delayed task is created so that the target predetermined scene can be executed when the delay time is reached.

If the target predetermined scene is not a delayed execution scene, an offline verifier is triggered by the consumer threads to determine whether the second IoT device is offline. If the second IoT device is online, an action executor is triggered by the consumer threads to generate an action execution instruction based on the target predetermined scene.

The action executor of the consumer threads converts the action execution instruction into a control command in accordance with the MQTT protocol and transmits the control command to a control server. The control server transmits the control command to a gateway corresponding to the second IoT device, and the gateway transmits the control command to the second IoT device.

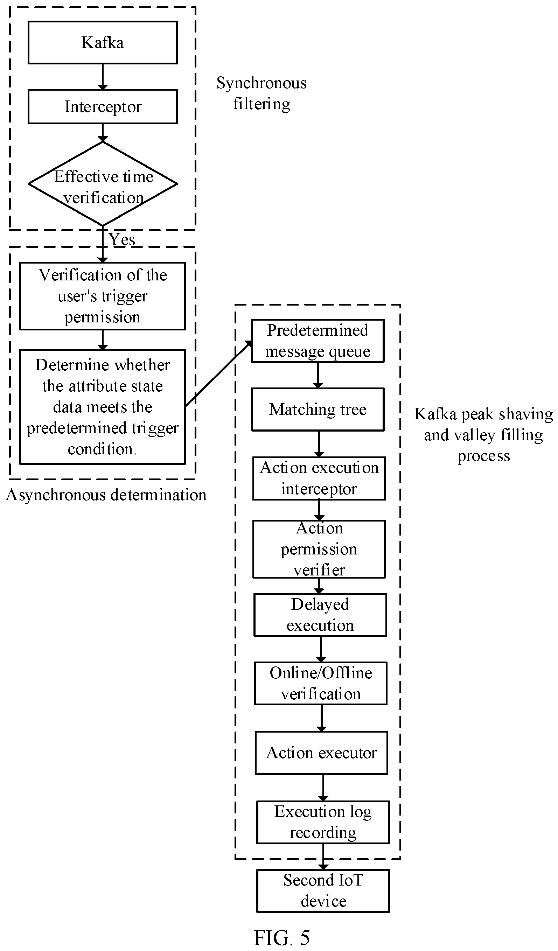

In this embodiment, initial attribute state data corresponding to target predetermined scenes that do not exist or are not within their effective time is synchronously intercepted to obtain attribute state data. This reduces the amount of attribute state data and accelerates the determination of whether the attribute state data meets the predetermined trigger condition, thereby improving the concurrency performance of the server, as illustrated in FIG. 5.

A plurality of determination threads in the thread pool asynchronously determine whether the attribute state data meets the predetermined trigger condition, further accelerating the determination process and improving the concurrency performance of the server, as illustrated in FIG. 5.

A plurality of consumer threads in the predetermined message queue determine whether to trigger the target predetermined scene, thereby improving the concurrency performance of the server. In addition, the attribute state data is first stored in the predetermined message queue and then consumed by multiple consumer threads from the predetermined message queue. This approach ensures that when the volume of attribute state data is large, consumer threads are not created without limitation. Instead, the predetermined message queue serves to buffer peak loads and smooth traffic fluctuations, thereby preventing server crashes and further improving the concurrency performance of the server, as illustrated in FIG. 5.

The improvement in concurrency performance provided by the embodiments of the present disclosure will now be described.

When a predetermined trigger condition corresponds to multiple predetermined scenes, the execution time of the second IoT device may be as illustrated in Table 1:

**Table 1**

| | Number of Matched Predetermined Scenes | Execution time | Target execution time |
|---|---|---|---|
| Related art | 13 | 632ms | 500ms |
| Present disclosure | 12 | 301ms | 500ms |

As illustrated in Table 1, when a single predetermined trigger condition corresponds to multiple predetermined scenes, the execution time is reduced from 632ms to 301ms, representing a reduction of 52.37%.

When a predetermined scene corresponds to multiple second IoT devices, the execution time of the second IoT devices may be as illustrated in Table 2:

**Table 2**

| | Number of Matched Devices in Predetermined Scene | Devices Controlled | Execution time |
|---|---|---|---|
| Related art | 180 | 178 | 1244ms |
| Present disclosure | 180 | 180 | 527ms |

As illustrated in Table 2, when a single predetermined scene corresponds to multiple second IoT devices, the execution time is reduced from 1244ms to 527ms, representing a reduction of 57.64%.

The data accumulation in Kafka may be as illustrated in Table 3:

**Table 3**

| | Execution Time Range | Number of Irregular Attribute State Data Reports per Minute | Total Irregular Attribute State Data Reports per Minute | Number of Regular Attribute State Data Reports per Minute | Total Regular Attribute State Data Reports per Minute | Kafka Peak/Avg Accumulation | CPU Max Consumption (%) | Average Memory Consumption (%) |
|---|---|---|---|---|---|---|---|---|
| Related art | 21:22-21:27 | 126000 | 1178555 | 6 | 32 | 394976 | 200.88% | 85.11% |
| Present disclosure | 16:56-17:26 | 12600*60 | | 6 | | 309 | 78.70% | 65.19% |

As can be seen from Table 3, the peak/average of Kafka accumulation dropped from 394976 to 309, the CPU Max consumption dropped from 200.88% to 78.7%, and the average memory consumption dropped from 85.11% to 65.19%.

The stress test results of the preset scenario can be illustrated in Table 4:

**Table 4**

| | Number of Matched Predetermined Scenes | Execution Time Range | Reported Attribute State Data Rate | Matched Predetermined Scene Execution Rate | Kafka Peak/Avg Accumulation | CPU Max Consumption (%) | Average Memory Consumption (%) |
|---|---|---|---|---|---|---|---|
| Related art | 2 | 11:47-12:17 | 85/s | 85/s | 15 | 97.20% | 92.42% |
| Present disclosure | 2 | 17:38-18:08 | 26/s | 26/s | 7 | 57.60% | 65.56% |

As illustrated in Table 4, in the stress test results for the predetermined scenes, the CPU Max consumption is reduced from 97.2% to 57.6%, and the average memory consumption is reduced from 92.42% to 65.56%.

To facilitate better implementation of the method of controlling devices provided by the embodiments of the present disclosure, the present disclosure also provides an apparatus based on the above-described method of controlling devices. The meanings of the terms are the same as those described in the above method of controlling devices, and the specific implementation details can be referred to in the description of the method embodiments.

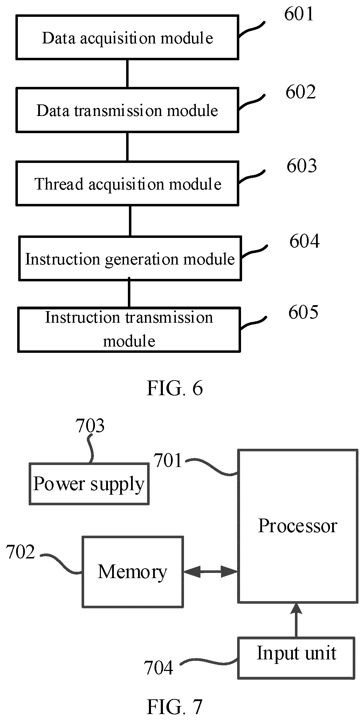

As illustrated in FIG. 6, the device control apparatus may comprise a data acquisition module 601, a data transmission module 602, a thread acquisition module 603, an instruction generation module 604, and an instruction transmission module 605.

The data acquisition module 601 is configured to acquire attribute state data reported by a plurality of first IoT devices.

The data transmission module 602 is configured to, in response to determining that the attribute state data meets a predetermined trigger condition, transmit the attribute state data to a predetermined message queue.

The thread acquisition module 603 is configured to obtain a plurality of consumer threads of the predetermined message queue and, by the consumer threads, acquire a target predetermined scene associated with the first IoT device and a current device shadow of a second IoT device corresponding to the target predetermined scene based on the attribute state data.

The instruction generation module 604 is configured to, in response to determining that the current device shadow matches a predetermined device shadow of the second IoT device in the target predetermined scene, generate, by the consumer threads, an action execution instruction for the second IoT device based on the target predetermined scene.

The instruction transmission module 605 is configured to, by the consumer threads, transmit the action execution instruction to the second IoT device to control the second IoT device to perform an operation corresponding to the action execution instruction.

Optionally, the instruction generation module 604 is further configured to:
perform an action permission verification on the second IoT device in response to determining that the current device shadow matches the predetermined device shadow of the second IoT device in the target predetermined scene; and
in response to the action permission verification being successful, generate the action execution instruction for the second IoT device based on the target predetermined scene.

Optionally, the device control apparatus further comprises a shadow matching module.

The shadow matching module is configured to:
acquire a shadow set generated based on the predetermined device shadow corresponding to the second IoT device in the target predetermined scene;
select a target second IoT device from among the second IoT devices, and select a target shadow set from the shadow set, wherein the target shadow set comprises a target predetermined device shadow that matches the current device shadow of the target second IoT device;
determine a matching result of the second IoT device based on the target shadow set; and
in response to the matching result being a first result, determine that the current device shadow matches the predetermined device shadow of the second IoT device in the target predetermined scene.

Optionally, the shadow matching module is further configured to:
search a lower-level shadow set corresponding to the target shadow set from the shadow set; and
match a current device shadow of an initial second IoT device among the second IoT devices with a predetermined device shadow in the lower-level shadow set to obtain the matching result of the second IoT device.

Optionally, the attribute state data comprises a device identifier and an attribute identifier of the first IoT device. Correspondingly, the data acquisition module 601 is further configured to:
acquire initial attribute state data reported by the plurality of first IoT devices;
determine a scene state corresponding to the first IoT device based on the device identifier and the attribute identifier included in the initial attribute state data; and
in response to determining that the scene state corresponding to the first IoT device is a target scene state, use the initial attribute state data of the first IoT device as the attribute state data reported by the first IoT device.

Optionally, the data acquisition module 601 is further configured to:
in response to determining that the scene state corresponding to the first IoT device is a target scene state, select a target predetermined scene corresponding to the first IoT device from a plurality of predetermined scenes;
acquire an acquisition time corresponding to the initial attribute state data; and
in response to determining that the effective time of the target predetermined scene matches the acquisition time, use the initial attribute state data of the first IoT device as the attribute state data reported by the first IoT device.

Optionally, the data acquisition module 601 is further configured to:
acquire an array corresponding to a predetermined scene, wherein the array comprises mapping values of device identifiers and attribute identifiers corresponding to the predetermined scene;
perform a mapping process on the device identifier and the attribute identifier in the initial attribute state data to obtain a current mapping value; and
in response to determining that the array comprises a mapping value matching the current mapping value, determine the scene state of the first IoT device as the target scene state.

Optionally, the data acquisition module 601 is further configured to:
determine a current position in the array corresponding to the matching current mapping value; and
in response to determining that a value at the current position is the target value, determine the scene state of the first IoT device as the target scene state.

Optionally, the data acquisition module 601 is further configured to:
perform a mapping process separately on the device identifier and the attribute identifier in the initial attribute state data to obtain a first current mapping value corresponding to the device identifier and a second current mapping value corresponding to the attribute identifier; and
determine the current mapping value based on the first current mapping value and the second current mapping value.

Optionally, the device control apparatus further comprises a data determination module.

The data determination module is configured to:
create a thread pool based on the attribute state data, wherein the thread pool comprises a plurality of determination threads; and
determine, by the determination threads, whether the attribute state data meets the predetermined trigger condition.

Optionally, the attribute state data further comprises a user identifier that triggered the first IoT device. Correspondingly, the data determination module is further configured to:
verify, by the determination threads, a trigger permission of the user identifier; and
in response to the trigger permission verification being successful, determine, by the determination threads, whether the attribute state data meets the predetermined trigger condition.

In practice, the above modules may be implemented as independent entities, or may be combined in any suitable manner to be implemented as one or more entities. The specific implementation methods and corresponding advantages of the above modules may be referred to in the method embodiments described earlier and will not be repeated here.

The present disclosure also provides an electronic device, which may be a server, a terminal, or other suitable device. FIG. 7 is a block diagram of an electronic device according to an embodiment of the present disclosure.

The electronic device may include a processor 701 having one or more processing cores, a memory 702 comprising one or more computer-readable storage media, a power supply 703, an input unit 704, and other components. It will be understood by those skilled in the art that the structure of the electronic device illustrated in FIG. 7 is not intended to limit the electronic device, and may include more or fewer components than those illustrated, combine certain components, or arrange the components differently.

The processor 701 serves as the control center of the electronic device and connects various parts of the electronic device via various interfaces and buses. By running or executing computer programs and/or modules stored in the memory 702 and invoking data stored in the memory 702, the processor 701 performs various functions and processes data for the electronic device. Optionally, the processor 701 may include one or more processing cores. Preferably, the processor 701 may integrate an application processor and a modem processor, wherein the application processor mainly handles the operating system, user interface, and application programs, and the modem processor mainly handles wireless communications. It is understood that the modem processor may also be implemented as a separate component rather than integrated into the processor 701.

The memory 702 may be used to store computer programs and modules. The processor 701 runs computer programs and modules stored in the memory 702 to perform various functions and process data. The memory 702 may include a program storage region and a data storage region. The program storage region may store an operating system, computer programs required for at least one function (such as audio playback, image playback, etc.), and the like. The data storage region may store data created according to the use of the electronic device. **In** addition, the memory 702 may include high-speed random-access memory (RAM) and may also include non-volatile memory, such as at least one disk storage device, flash memory device, or other volatile or non-volatile solid-state memory device. Correspondingly, the memory 702 may also include a memory controller to provide the processor 701 with access to the memory 702.

The electronic device may further include a power supply 703 configured to supply power to various components. Preferably, the power supply 703 may be logically connected to the processor 701 through a power management system, thereby managing functions such as charging, discharging, and power consumption through the power management system. The power supply 703 may include one or more direct current (DC) or alternating current (AC) power sources, a rechargeable system, a power failure detection circuit, a power converter or inverter, a power status indicator, or any combination thereof.

The electronic device may further include an input unit 704. The input unit 704 may be used to receive digital or character input information and to generate input signals related to user settings and function control, such as a keyboard, mouse, joystick, optical input device, or trackball.

Although not illustrated, the electronic device may further include a display unit or other components, which are not described in detail herein. Specifically, in this embodiment, the processor 701 of the electronic device operates according to the following instructions to load executable files corresponding to one or more computer program processes into the memory 702, and the processor 701 executes the computer programs stored in the memory 702 to implement various functions comprising:
acquiring attribute state data reported by a plurality of first IoT devices;
in response to determining that the attribute state data meets a predetermined trigger condition, transmitting the attribute state data to a predetermined message queue;
obtaining a plurality of consumer threads of the predetermined message queue and, by the consumer threads, acquiring a target predetermined scene associated with the first IoT device and a current device shadow of a second IoT device corresponding to the target predetermined scene based on the attribute state data;
in response to determining that the current device shadow matches a predetermined device shadow of the second IoT device in the target predetermined scene, generating, by the consumer threads, an action execution instruction for the second IoT device based on the target predetermined scene; and
by the consumer threads, transmitting the action execution instruction to the second IoT device to control the second IoT device to perform an operation corresponding to the action execution instruction.

The specific implementation methods and corresponding advantages of the above operations may be referred to in the detailed description of the method of controlling devices provided earlier and will not be repeated here.

It will be understood by those of ordinary skill in the art that all or part of the steps of the above-described methods in the embodiments may be implemented by a computer program or may be implemented by controlling relevant hardware using a computer program. The computer program may be stored in a computer-readable storage medium and loaded and executed by a processor.

Accordingly, the present disclosure further provides a computer-readable storage medium, in which a computer program is stored. The computer program can be loaded and executed by a processor to perform the steps of any of the method of controlling devices provided in the embodiments of the present disclosure. For example, the computer program may perform the following operations:
acquiring attribute state data reported by a plurality of first IoT devices;
in response to determining that the attribute state data meets a predetermined trigger condition, transmitting the attribute state data to a predetermined message queue;
obtaining a plurality of consumer threads of the predetermined message queue and, by the consumer threads, acquiring a target predetermined scene associated with the first IoT device and a current device shadow of a second IoT device corresponding to the target predetermined scene based on the attribute state data;
in response to determining that the current device shadow matches a predetermined device shadow of the second IoT device in the target predetermined scene, generating, by the consumer threads, an action execution instruction for the second IoT device based on the target predetermined scene; and
transmitting, by the consumer threads, the action execution instruction to the second IoT device to control the second IoT device to perform an operation corresponding to the action execution instruction.

The specific implementation methods and corresponding advantages of the above operations may be referred to in the embodiments described earlier and will not be repeated here.

The computer-readable storage medium may include: a read-only memory (ROM), a random access memory (RAM), a magnetic disk or an optical disk, etc.

Since the computer program stored in the computer-readable storage medium can perform the steps of any of the device control methods provided in the embodiments of the present disclosure, it can achieve the beneficial effects achievable by any of the device control methods provided in the embodiments of the present disclosure. For details, reference may be made to the foregoing embodiments, which will not be repeated here.

According to one aspect of the present disclosure, a computer program product or a computer program is further provided. The computer program product or computer program comprises computer instructions stored in a computer-readable storage medium. The processor of a computing device reads the computer instructions from the computer-readable storage medium and executes the computer instructions, causing the computing device to perform the above-described device control method.

The foregoing describes in detail a device control method, a device control apparatus, an electronic device, and a computer-readable storage medium provided by the embodiments of the present disclosure. The principles and embodiments of the present disclosure are explained with reference to specific examples. The description of the above embodiments is intended to help illustrate the methods and core concepts of the present disclosure. It should be understood that for those skilled in the art, various modifications and variations may be made to the specific implementations and application scope based on the teachings of the present disclosure. Therefore, the contents of this specification should not be construed as limiting the present disclosure.

## Claims

1. A method for controlling devices, **characterized in that** the method comprises:
acquiring attribute state data reported by a plurality of first IoT devices;
sending the attribute state data to a predetermined message queue in response to determining that the attribute state data meets a predetermined trigger condition;
obtaining a plurality of consumer threads of the predetermined message queue, and acquiring, by the consumer threads, a target predetermined scene associated with the first IoT devices and a current device shadow of a second IoT device corresponding to the target predetermined scene based on the attribute state data;
generating an action execution instruction for the second IoT device by the consumer threads based on the target predetermined scene in response to determining that the current device shadow matches a predetermined device shadow of the second IoT device in the target predetermined scene; and
transmitting, by the consumer threads, the action execution instruction to the second IoT device to control the second IoT device to perform an operation corresponding to the action execution instruction.

2. The method of claim 1, wherein generating the action execution instruction for the second IoT device by the consumer threads based on the target predetermined scene in response to determining that the current device shadow matches the predetermined device shadow of the second IoT device in the target predetermined scene comprises:
performing an action permission verification on the second IoT device in response to determining that the current device shadow matches the predetermined device shadow of the second IoT device in the target predetermined scene; and
generating the action execution instruction for the second IoT device based on the target predetermined scene in response to the action permission verification being successful.

3. The method of claim 1, further comprising, prior to the determining that the current device shadow matches the predetermined device shadow of the second IoT device in the target predetermined scene:
acquiring a shadow set generated based on the predetermined device shadow corresponding to the second IoT device in the target predetermined scene;
selecting a target second IoT device from among the second IoT devices, and selecting a target shadow set from the shadow set, wherein the target shadow set comprises a target predetermined device shadow that matches the current device shadow of the target second IoT device;
determining a matching result of the second IoT device based on the target shadow set; and
determining that the current device shadow matches the predetermined device shadow of the second IoT device in the target predetermined scene in response to the matching result being a first result.

4. The method of claim 3, wherein the determining a matching result of the second IoT device based on the target shadow set comprises:
searching a lower-level shadow set corresponding to the target shadow set from the shadow set; and
matching a current device shadow of an initial second IoT device among the second IoT devices with a predetermined device shadow in the lower-level shadow set to obtain the matching result of the second IoT device.

5. The method of claim 1, wherein the attribute state data comprises a device identifier and an attribute identifier of the first IoT device, and the acquiring the attribute state data reported by the plurality of first IoT devices comprises:
acquiring initial attribute state data reported by the plurality of first IoT devices;
determining a scene state corresponding to the first IoT device based on the device identifier and the attribute identifier in the initial attribute state data; and
using the initial attribute state data of the first IoT device as the attribute state data reported by the first IoT device in response to determining that the scene state corresponding to the first IoT device is a target scene state.

6. The method of claim 5, wherein the using the initial attribute state data of the first IoT device as the attribute state data reported by the first IoT device in response to determining that the scene state corresponding to the first IoT device is a target scene state comprises:
selecting a target predetermined scene corresponding to the first IoT device from a plurality of predetermined scenes in response to determining that the scene state corresponding to the first IoT device is the target scene state;
acquiring an acquisition time of the initial attribute state data; and
in response to determining that an effective time of the target predetermined scene matches the acquisition time, using the initial attribute state data of the first IoT device as the attribute state data reported by the first IoT device.

7. The method of claim 5, wherein the determining the scene state corresponding to the first IoT device based on the device identifier and the attribute identifier in the initial attribute state data comprises:
acquiring an array corresponding to a predetermined scene, the array comprising mapping values of the device identifier and the attribute identifier corresponding to the predetermined scene;
performing a mapping process on the device identifier and the attribute identifier in the initial attribute state data to obtain a current mapping value; and
in response to determining that the array comprises a mapping value matching the current mapping value, determining the scene state of the first IoT device as the target scene state.

8. The method of claim 7, wherein the mapping value corresponds to a target value in the array, and determining the scene state of the first IoT device as the target scene state in response to determining that the array comprises a mapping value matching the current mapping value comprises:
determining a current position in the array corresponding to the matching current mapping value; and
in response to determining that a value at the current position is the target value, determining the scene state of the first IoT device as the target scene state.

9. The method of claim 7, further comprising, prior to the determining the scene state of the first IoT device as the target scene state in response to determining that the array comprises a mapping value matching the current mapping value:
determining a difference between the current mapping value and each mapping value in the array; and
using a mapping value corresponding to a difference that satisfies a predetermined difference condition as the matching mapping value for the current mapping value, and determining that the array comprises a mapping value matching the current mapping value.

10. The method of claim 7, wherein the performing the mapping process on the device identifier and the attribute identifier in the initial attribute state data to obtain the current mapping value comprises:
performing a mapping process on the device identifier and the attribute identifier in the initial attribute state data to obtain a first current mapping value corresponding to the device identifier and a second current mapping value corresponding to the attribute identifier in the initial attribute state data; and
determining the current mapping value based on the first current mapping value and the second current mapping value.

11. The method of claim 7, wherein the performing the mapping process on the device identifier and the attribute identifier in the initial attribute state data to obtain the current mapping value comprises:
concatenating the device identifier and the attribute identifier in the initial attribute state data to obtain a concatenated identifier; and
performing a mapping process on the concatenated identifier to obtain the current mapping value.

12. The method of any one of claims 1 to 11, further comprising, prior to sending the attribute state data to the predetermined message queue in response to determining that the attribute state data meets the predetermined trigger condition:
creating a thread pool based on the attribute state data, the thread pool comprising a plurality of determination threads; and
determining, by the determination threads, whether the attribute state data meets the predetermined trigger condition.

13. The method of claim 12, wherein the attribute state data further comprises a user identifier triggering the first IoT device, and the determining, by the determination threads, whether the attribute state data meets the predetermined trigger condition comprises:
verifying, by the determination threads, a trigger permission of the user identifier; and
in response to the trigger permission verification being successful, determining, by the determination threads, whether the attribute state data meets the predetermined trigger condition.

14. The method of claim 1, wherein the attribute state data comprises an attribute identifier and state data, and further comprising, prior to sending the attribute state data to the predetermined message queue in response to determining that the attribute state data meets the predetermined trigger condition:
inputting the attribute identifier and the state data into a trigger tree for matching; and
in response to determining that a string matching the attribute identifier and the state data exists in the trigger tree, determining that the attribute state data meets the predetermined trigger condition.

15. An apparatus for controlling devices, **characterized in that** the apparatus comprises:
a data acquisition module, configured to acquire attribute state data reported by a plurality of first IoT devices;
a data transmission module, configured to, in response to determining that the attribute state data meets a predetermined trigger condition, transmit the attribute state data to a predetermined message queue;
a thread acquisition module, configured to obtain a plurality of consumer threads of the predetermined message queue, and, by the consumer threads, acquire a target predetermined scene associated with the first IoT devices and a current device shadow of a second IoT device corresponding to the target predetermined scene based on the attribute state data;
an instruction generation module, configured to, in response to determining that the current device shadow matches a predetermined device shadow of the second IoT device in the target predetermined scene, generate, by the consumer threads, an action execution instruction for the second IoT device based on the target predetermined scene; and
an instruction transmission module, configured to, by the consumer threads, transmit the action execution instruction to the second IoT device to control the second IoT device to perform an operation corresponding to the action execution instruction.

16. The apparatus of claim 15, wherein the instruction generation module is further configured to:
perform an action permission verification on the second IoT device in response to determining that the current device shadow matches the predetermined device shadow of the second IoT device in the target predetermined scene; and
in response to the action permission verification being successful, generate the action execution instruction for the second IoT device based on the target predetermined scene.

17. The apparatus of claim 15, further comprising a shadow matching module configured to:
acquire a shadow set generated based on the predetermined device shadow corresponding to the second IoT device in the target predetermined scene;
select a target second IoT device from among the second IoT devices, and select a target shadow set from the shadow set, wherein the target shadow set comprises a target predetermined device shadow that matches the current device shadow of the target second IoT device;
determine a matching result of the second IoT device based on the target shadow set; and
in response to the matching result being a first result, determine that the current device shadow matches the predetermined device shadow of the second IoT device in the target predetermined scene.

18. The apparatus of claim 17, wherein the shadow matching module is further configured to:
search a lower-level shadow set corresponding to the target shadow set from the shadow set; and
match a current device shadow of an initial second IoT device among the second IoT devices with a predetermined device shadow in the lower-level shadow set to obtain the matching result of the second IoT device.

19. An electronic device, comprising a processor and a memory storing computer program executable by the processor to perform the method as claimed in any one of claims 1 to 14.

20. A computer-readable storage medium storing computer program executable by a processor to perform the method as claimed in any one of claims 1 to 14.
